# EUROPEAN PATENT SPECIFICATION

(11) **EP 2 110 620 B1**
(45) Date of publication and mention of the grant of the patent: **07.04.2010**
(21) Application number: 08154638.4
(22) Date of filing: 16.04.2008
(51) Int. Cl.: F24H 9/12, F24D 3/10, F16K 11/00, F24D 19/10, G05D 7/00

(54) **Four-way valve**
Vierwegeventil
Soupape à quatre voies

(43) Date of publication of application: 21.10.2009
(73) Proprietor: Riva, Fabrizio Paolo, 23884 Castello di Brianza (LC) (IT)
(72) Inventor: Riva, Fabrizio Paolo, 23884 Castello di Brianza (LC) (IT)
(74) Representative: Ripamonti, Enrico

(56) References cited:
- EP-A- 1 895 245
- WO-A-94/18509
- DE-A1- 19 837 012

## Description

The present invention relates to a four-way valve for distributing and controlling a liquid to the individual user appliance, from which the liquid normally returns at a different temperature.

In plants for distributing water to sanitary appliances and/or heating elements, four-way valves are used for interposing between the delivery and return columns (particularly of a boiler) and the circuits feeding the user appliances (in particular radiators and/or sanitary appliances), including for the purples of calculating the consumption of hot and cold water by the individual user appliances (particularly in a condominium).

A valve of this type is described in EP 1895245A2 and is provided with a body having an upstream face, a downstream face and a lateral surface which joins the upstream face to the downstream face. The body comprises:
- a delivery branch for the hot water originating from the boiler, which comprises an inlet port provided in the upstream face of the body, and an outlet port provided in the downstream face to feed hot water to the user appliance;
- a return branch for the cooled water originating from the user appliance, which comprises an inlet port provided in the downstream face of the body, and an outlet port provided in the upstream face, for the return of the cooled water to the boiler.

The delivery branch also comprises:
- a filtration chamber communicating with the delivery inlet port and open to the outside via a relative aperture provided in the lateral surface of the body, this aperture being closable by a relative plug;
- a by-pass chamber communicating with the inlet port via a filtering chamber, the by-pass chamber being open to the outside via a relative aperture provided in the lateral surface of the body, this aperture being arranged to house a by-pass valving element which abuts against a by-pass seat provided in correspondence with a first end of a by-pass conduit which connects the delivery branch to the return branch;
- a liquid temperature measurement chamber communicating with the by-pass chamber and with the outlet port towards the user appliance, and open to the outside via a relative aperture provided in the lateral surface of the body, this aperture being arranged to house a water temperature measurement probe.

The return branch also comprises:
- an interception chamber for the cooled water originating from the user appliance, in communication with the inlet port from the user appliance and open to the outside via a relative aperture provided in the lateral surface of the body, this aperture being arranged to house a shutoff valve provided with a shutoff valving element maintained abutting against the shutoff seat by the action of a helical spring, the shutoff valving element being operable into the open position by an external actuator controlled by a control unit, the other end of said by-pass conduit opening into the interception chamber;
- a balancing chamber in communication with the interception chamber and with the return outlet port, and open to the outside via a relative aperture provided in the lateral surface of the body and arranged to house a balancing valve the valving element of which allows the flow rate of the return water to be regulated.

From the preceding description of this known four-way valve, it is apparent that although grouping all the required functions into a single device, it has a size in the direction of the axis of said inlet and outlet ports which in many cases can create location problems, because of which very favourable reception would be given in the sector to a four-way valve able to perform the essential functions of the known valve, but having a smaller size in said direction, this constituting an object of the invention.

Another drawback is a consequence of the fact that the valving element of the by-pass valve abuts against the relative seat, so that if for an oversight the by-pass valve is not regulated and remains closed, hydraulic unbalances can occur in the plant due to an excessive pressure increase upstream.

Another object is therefore to provide a valve of said type which is not subject to hydraulic unbalances caused by the fact that the by-pass valve has been inadvertently left closed.

A further drawback is due to the fact that in the embodiment of said valve represented in Figures 1-3 of EP1895245A2 both the by-pass valve and the balancing valve, once set by authorized personnel, can be easily tampered with by anybody, which can create problems for the entire plant.

A further object of the invention is therefore to make it impossible for a non-authorized person to easily alter the setting of this valve.

Before proceeding with the explanation of how the stated objects are attained, it should be noted that it has not been considered necessary to provide a temperature measurement chamber with relative sensor in the valve of the present invention, the corresponding function not being required in this valve, seeing that it can be conveniently implemented in another point of the plant. Consequently, with reference to the initially aforestated object, the size of the valve of the present invention in the direction of the inlet and outlet port axes has to be less than that of the aforesaid known valve, even if this latter were not provided with the temperature measurement chamber.

The aforesaid objects are attained by the four-way valve in accordance with the accompanying claims.

It should be noted that if it is required to provide the valve of the present invention with a filter, it can be disposed directly in the by-pass chamber, with the advantage of not having to provide a specific filtration chamber (this substantially reducing the length of the delivery branch).

The invention will be more easily understood from the ensuing description of an exemplified embodiment thereof. In this description reference will be made to the accompanying drawings, in which:
Figure 1 is a section through the valve according to the present invention, taken on a plane containing the axes of its inlet and outlet apertures;
Figure 2 shows an enlarged section though just the head of the shutoff valving element ;
Figure 3 is a plan view of this head, from above;
Figure 4 is a coaxial enlarged section through the stem of the shutoff valving element;
Figure 5 is a section therethrough on the line 5-5 of Figure 4;
Figure 6 is an enlargement of the detail 6 of Figure 1.

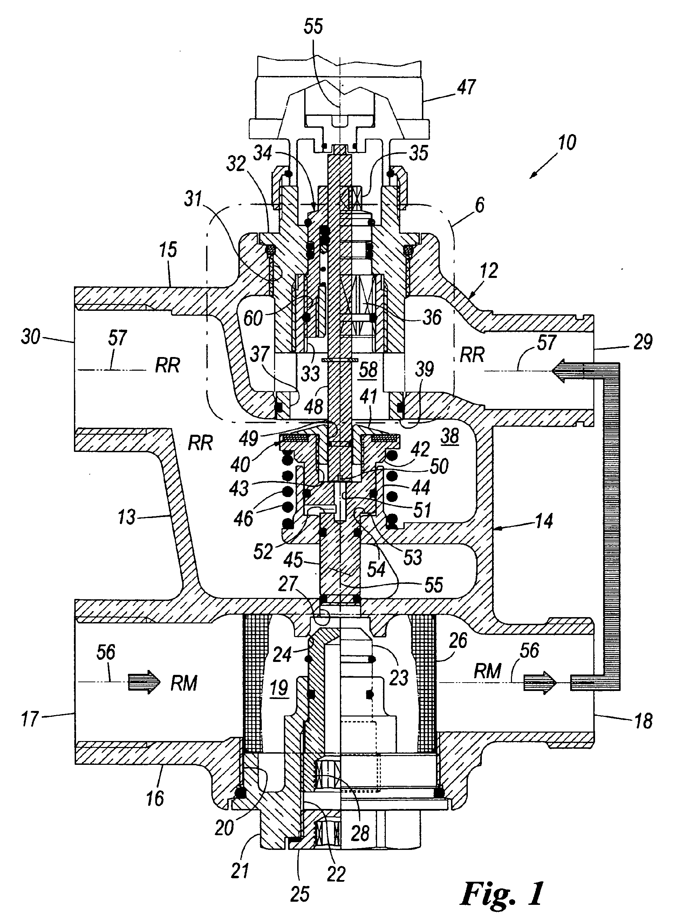

As can be seen from Figure 1, the valve 10 represented therein comprises a body 12 having a upstream face 13, a downstream face 14 and a lateral surface which connects the upstream face 13 to the downstream face 14 and, in the specific illustrated case, comprises an upper face 15 and a lower face 16.

In the body 12 there are provided a delivery branch RM for the liquid - hot or cold, depending on the use (heating or cooling) - originating from the plant delivery column, and a return branch RR for conveying to the plant return column the liquid originating from the user appliance (the temperature of the return liquid being lower or higher than the delivery temperature depending, as stated, on the use).

Again from Figure 1 it can be seen that the delivery branch RM comprises an inlet port 17 provided in the upstream face 13 of the body 12 and an outlet port 18 provided in the downstream face 14, the two ports 17 and 18 being, in this specific case, coaxial. Between the inlet port 17 and the outlet port 18 there is provided only a by-pass chamber 19 open to the outside via a threaded aperture 20 provided in the lower face 16 of the body 12. This aperture 20 is closed by a first threaded plug 21 screwed into the aperture 20 and hence also removable. The first plug 21 presents in its turn a threaded aperture 22 to house the valving element 23 of a by-pass valve. This valving element 23 can be screwed into the second aperture 22 such as to be able to approach to a greater or lesser extent a relative seat 24 which together with the valving element 23 forms a by-pass valve. The position of the by-pass valving element 23 is regulated by a simple socket spanner which engages in a coaxial hexagonal cavity 28 provided in the lower end of the valving element 23.

It should be noted that in the valve 10 the by-pass valving element 23 is prevented from abutting against the by-pass seat 24, so that the by-pass port 27, defined by the seat 24, always connects the delivery branch RM to the return branch RR. This has been specifically required to prevent, should the personnel concerned forget to regulate the by-pass valve, that this latter remains closed, causing hydraulic unbalances in the plant due to an excessive increase in upstream pressure.

From Figure 1 it can also be seen that the outer end of the by-pass valving element 23 is inserted rather deeply into the aperture 22 of the first plug 21, to have sufficient space for the second threaded plug 25 which hides the hexagonal cavity 28 of the valving element 23 from the view of non-authorized personnel, to prevent them from easily tampering with the regulation (hence contributing to attaining the third aforesaid object).

As already stated, the valve 10 does not comprise a specific filtration chamber as in the case of the valve according to EP 1895245 A2. It has already been stated that if it is considered necessary to provide filtration of the liquid to be fed to the user appliance, a filter 26 of cylindrical surface can be easily inserted into the by-pass chamber 19 (as can be seen from Figure 1). It will be apparent from that figure that the filter 26 can be replaced by simply unscrewing the plug 21 without altering the already determined by-pass setting.

The return branch RR also comprises an inlet port 29 provided in the downstream face 14 of the body 12 and an outlet port 30 provided in the upstream face 13, the ports 29 and 30 being, in the specific illustrated case, coaxial with the common axis 57 parallel to the common axis 56 of the ports 17 and 18 of the delivery branch RM.

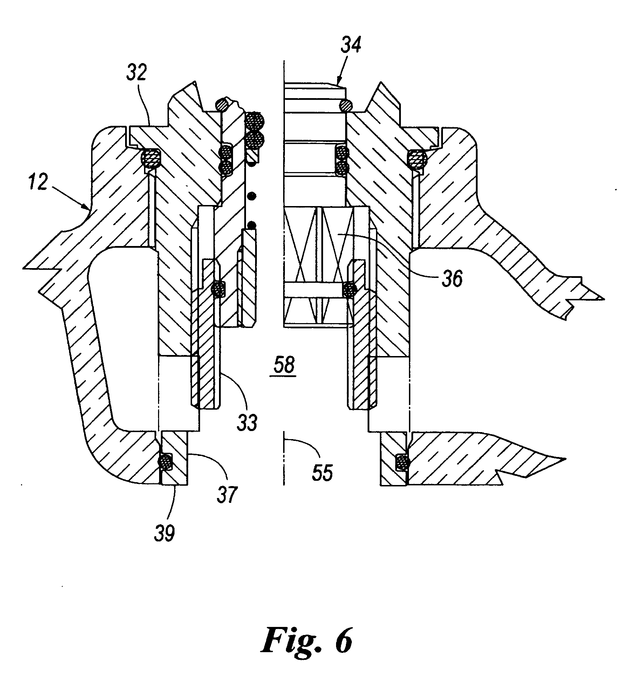

The inlet port 29 communicates directly with a pre-regulation chamber 58 open to the outside via an aperture 31 provided in the upper face 15 of the body 12 and closable by a threaded plug 32 arranged to receive pre-regulation means comprising a pre-regulation ring nut 33 vertically movable in the two directions by a mechanism comprising a coaxial hollow pin 34 rotatably fixed to the plug 32 and having its upper end 35 shaped as a hexagon and engagable with a suitable tool able to rotate the pin 34 about its axis. The lower end 36 of the hollow pin is also shaped as a hexagon to mate with the coaxial hexagonal inner cavity 60 of the ring nut 33, this latter being externally threaded to screw into the plug 32. Consequently, by rotating the pin 34 in one or the other direction using said tool, the ring nut 33 is made to rise or descent between its two end positions represented in Figures 1 and 6 respectively. In this manner the return liquid flow rate can be pre-regulated and which, entering from the inlet port 29, passes into the pre-regulation chamber 58 to then pass through an interception port 37 which communicates with the outlet port 30 via an outlet chamber 38. From the aforegoing it is apparent that the ring nut 33, whatever its position, never impedes liquid passage through the interception port 37. This latter is bounded lowerly by the shutoff seat 39, coaxial with the ring nut 33. In the outlet chamber 38 a shutoff valving element 40 is present provided with a conical head 41 partially insertable, by screwing, into the threaded coaxial cylindrical cavity 43 provided in the stem 42 of the valving element 40 to hence be able to regulate the relative position of the direction of the axis 55. The shutoff valving element 40 can move vertically overall in the two directions by virtue of a cylindrical guide 44 fixed to the body 12.

From the aforegoing it is apparent that in the four-way valve 10 the interception chamber coincides with the pre-regulation chamber 58, the same chamber having essentially two functions.

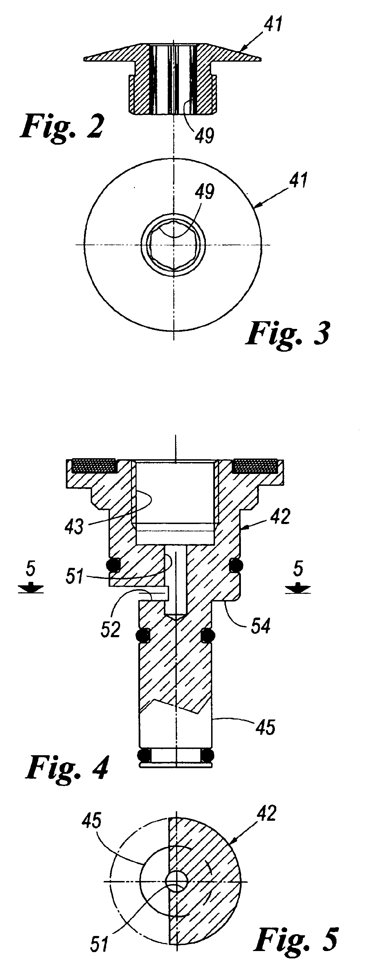

From Figure 1 it can be seen that the shutoff valving element 40 also presents a downwardly projecting coaxial stub 45, acting as a shutoff element for closing the by-pass port 27 when the shutoff valving element 40 is in its open position (Figure 1). The shutoff valving element 40 is normally maintained in its position abutting against the shutoff seat 39 by the helical spring 46, but can be brought into its open position by the intervention of a conventional actuator 47 (shown only partly in Figure 1) disposed outside the body 12 and more precisely applied to the plug 32. The actuator 47 is arranged to downwardly thrust a cylindrical shaft 48 disposed coaxially within the hollow pin 34, its lower end coming into contact with the bottom of the cylindrical coaxial cavity 43 provided in the stem 42 of the shutoff valving element 40. As the shaft 48 is inserted into a through hole 49 having the configuration (more or less hexagonal) shown in Figure 3 and coaxial with the head 41 of the valving element 40, even when this latter is in its closed position there is communication between the pre-regulation chamber 58 and the free remaining part of the cylindrical cavity 43. Because of the presence of a diametrical cut 50 in correspondence with the lower end of the shaft 48, with the coaxial dead hole 51 in the stem 42 of the valving element 40 and with the radial channel 56, said free part of the cavity 43 communicates with a chamber 53 between a shoulder 54 of the stem 42 and the bottom of the guide 44. From that stated, in the chamber 53 (which acts as a compensation chamber) there is the same pressure as in the pre-regulation chamber 58. The resultant force due to this pressure on the shoulder 54 opposes the force exerted on the head 41 of the valving element 40 by the liquid contained in the pre-regulation chamber 58, to reduce the necessary thrust which the actuator 47 has to exert to bring the valving element 40 from its closed position to its open position (Figure 1). The presence of the compensation chamber 53 in addition to the spring 46 ensures the differential seal between the pre-regulation chamber 58 and the outlet chamber 38. The reduction in the thrust exerted by the actuator 47 results in a lower production cost and a saving in operating energy compared with the actuator of the valve described in EP1895245A2.

It should be noted that in the valve 10, in order to be able to vary the position of the pre-regulation ring nut 33 and hence vary the liquid flow rate through the return branch RR, the actuator 47 must be removed. This makes tampering much more difficult by non-authorized personnel aimed at altering the liquid flow rate through the return branch RR (in contrast to the four-way valve described in EP1895245A2, in which the balancing valve can be easily tampered with by anybody).

From Figure 1 it can be appreciated that the pre-regulation ring nut 33, the shutoff valving element 40 with the relative shutoff seat 39, and the by-pass port 27 with the relative by-pass valving element 23 are coaxial, the common axis 55 being perpendicular both to the common axis 56 of the inlet port 17 and outlet port 18 of the delivery branch RM, and to the common axis 57 of the inlet port 29 and outlet port 30 of the return branch RR. This contributes to reducing the dimension of the valve 10 in the required direction, so that this valve has a dimension in this direction decidedly less than that of the valve described in EP1895245A2, even supposing that the measurement chamber were to be eliminated from this latter. This is a confirmation that the valve 10 also enables the second aforesaid object to be attained.

Finally it should be noted that the liquid concerned is normally water, possibly with antifreeze substances (for example glycol) added.

## Claims

1. A four-way valve (10) for distributing and controlling a liquid to a user appliance from which the liquid normally returns at a different temperature, the valve (10) being provided with a body (12) having an upstream face (13), a downstream face (14) and a lateral surface (15, 16) which joins the upstream face (13) to the downstream face (14), the body (12) comprising a delivery branch (RM) for the liquid originating from the plant delivery column, and a return branch (RR) for conveying the liquid originating from the user appliance to the return column,
the delivery branch (RM) comprising:
- an inlet port (17) for the liquid originating from the delivery column and provided in the upstream face (13) of the body (12), and an outlet port (18) for feeding the user appliance provided in the downstream face (14) of the body (12);
- a by-pass chamber (19) open to the outside via a relative aperture (20) provided in the lateral surface (16) of the body (12), this aperture (20) enabling the housing of a by-pass valving element (23) arranged to cooperate with a relative seat (24) which defines a by-pass port for connecting the delivery branch (RM) to the return branch (RR);
the return branch (RR) comprising:
- an inlet port (29) for the liquid originating from the user appliance and provided in the downstream face (14) of the body (12), and an outlet port (30) communicating with the return column and provided in the upstream face (13) of the body (12);
- an interception chamber (38), in communication with the entry port (29) from the user appliance, and a shutoff valving element (40) maintained abutting against a relative seat (39) by a spring (46), the shutoff valving element (40) being operable by an external actuator (47) to bring it into its open position against the action of said spring (46);
- means (33, 35) for regulating the flow rate of the liquid in the return branch (RR);
**characterised in that**:
- the by-pass chamber (19) communicates directly with the inlet port (17) of the delivery branch (RM);
- the by-pass valving element (23) is prevented from abutting against the relative seat (24) to allow a predetermined minimum flow rate of liquid to pass through the by-pass port (27);
- the shutoff valving element (40) also presents an additional valving element (45) intended to cooperate with the by-pass port (27) to prevent the passage of liquid through this port (27) when the shutoff valving element (40) is in its open position and to allow this passage when said valving element (40) is in it closed position;
- said means for regulating the flow rate through the return branch (RR) comprise: a pre-regulation chamber (58), which also acts as the interception chamber (38), communicating directly with the inlet port (29) of the return branch (RR) and with the relative outlet port (30) through a port (49) bounded by the shutoff seat (39), the pre-regulation chamber (58) communicating with the outside via a relative aperture (31) closed by a plug (32) arranged to receive not only said actuator (47) but also a pre-regulation ring nut (33) coaxial with the shutoff seat (39); and means (35, 36) for positioning the pre-regulation ring nut (33) more or less close to the shutoff port (49) to pre-regulate the liquid flow rate passing through the return branch (RR).

2. A four-way valve (10) as claimed in claim 1, wherein the by-pass chamber (19) also communicates directly with the outlet port (18) of the delivery branch (RM).

3. A four-way valve as claimed in claim 1, wherein a compensation chamber (53) is provided to the rear of the shutoff valving element, this chamber (53) being permanently in communication with the inlet port (29) of the return branch (RR), so as to reduce the force which the actuator (47) has to exert on the shutoff valving element (40), against said relative spring (46), to bring it into its open position.

4. A four-way valve (10) as claimed in claim 1, wherein the by-pass valving element (23) is housed in an aperture (22) provided in a first plug (21) arranged to close the external by-pass aperture (20), the aperture (22) in the first plug (21) being arranged to receive externally a second plug (25) to prevent the by-pass valving element (23) from being seen.

5. A four-way valve (10) as claimed in claim 1, wherein, if a liquid filter is required in the delivery branch (RM), the filter is located in the by-pass chamber (19).

6. A four-way valve (10) as claimed in claim 5, wherein the filter (26) is shaped with a cylindrical surface and surrounds the by-pass valving element (23).

7. A four-way valve (10) as claimed in claim 1, wherein the pre-regulation ring nut (33), the shutoff valving element (40) with the relative seat (39), and the by-pass valving element (23) with the relative port (27) are coaxial, the common axis (55) being perpendicular both to the common axis (56) of the inlet port (17) and outlet port (18) of the delivery branch (RM), and to the common axis (57) of the inlet port (29) and outlet port (30) of the return branch (RR).

8. A four-way valve (10) as claimed in claim 7, wherein the shutoff valving element (40) is made to open by the actuator (47) by means of a shaft (48) disposed coaxially to the pre-regulation ring nut (33).

## Patentansprüche

1. Vierwegeventil (10) zur Verteilung und zur Steuerung einer Flüssigkeit zu einer Vorrichtung eines Benutzers, von welcher die Flüssigkeit normalerweise mit einer anderen Temperatur zurückströmt, wobei das Ventil (10) mit einem Körper (12) versehen ist, welcher eine stromaufwärtige Fläche (13), eine stromabwärtige Fläche (14) und eine Seitenfläche (15, 16), welche die stromaufwärtige Fläche (13) mit der stromabwärtigen Fläche (14) verbindet, aufweist, wobei der Körper (12) einen Zuflusszweig (RM) für die Flüssigkeit, welche von der Anlagenzuflusssäule stammt, und einen Rückflusszweig (RR), um die Flüssigkeit, welche von der Vorrichtung des Benutzers stammt, zu der Rückflusssäule zu führen, umfasst,
wobei der Zuflusszweig (RR) umfasst:
- einen Einlassanschluss (17) für die Flüssigkeit, welche von der Zuflusssäule stammt, und wobei der Einlassanschluss in der stromaufwärtigen Fläche (13) des Körpers (12) vorhanden ist, und einen Auslassanschluss (18), um die Vorrichtung des Benutzers zu versorgen, wobei der Auslassanschluss in der stromabwärtigen Fläche (14) des Körpers (12) vorhanden ist;
- eine Umgehungskammer (19), welche mit einer entsprechenden Öffnung (20), die in der Seitenfläche (16) des Körpers (12) vorhanden ist, nach außen offen ist,
wobei diese Öffnung (20) die Aufnahme eines Umgehungsventilelements (23) ermöglicht, welches derart ausgestaltet ist, dass es mit einer entsprechenden Auflage (24) zusammenwirkt, was einen Umgehungsanschluss zur Verbindung des Zuflusszweigs (RM) mit dem Rückflusszweig (RR) definiert;
wobei der Rückflusszweig (RR) umfasst:
- einen Einlassanschluss (29) für die Flüssigkeit, welche von der Vorrichtung des Benutzers stammt, wobei der Einlassanschluss in der stromabwärtigen Fläche (14) des Körpers (12) vorhanden ist, und einen Auslassanschluss (30), welcher mit der Rückflusssäule in Verbindung steht und in der stromaufwärtigen Fläche (13) des Körpers (12) vorhanden ist;
- eine Auffangkammer (38) in Verbindung mit dem Einlassanschluss (29) von der Vorrichtung des Benutzers und ein Schließventilelement (40), welches durch eine Feder (46) gegen eine entsprechende Auflage (39) gedrückt gehalten wird, wobei das Schließventilelement (40) durch ein externes Bedienelement (47) bedienbar ist, um es gegen die Wirkung der Feder (46) in seine offene Stellung zu bringen;
- Mittel (33, 35), um die Flussrate der Flüssigkeit in dem Rückflusszweig (RR) zu regulieren;
**dadurch gekennzeichnet:**
- **dass** die Umgehungskammer (19) in direkter Verbindung mit dem Einlassanschluss (17) des Zuflusszweiges (RM) steht;
- **dass** das Umgehungsventilelement (23) daran gehindert wird, gegen die entsprechende Auflage (24) zu stoßen, um einer vorbestimmten minimalen Flussrate der Flüssigkeit zu ermöglichen, durch den Umgehungsanschluss (27) zu strömen;
- **dass** das Schließventilelement (40) auch ein weiteres Ventilelement (45) aufweist, welches dazu ausgestaltet ist, mit dem Umgehungsanschluss (27) zusammenzuwirken, um den Durchgang der Flüssigkeit durch diesen Anschluss (27) zu verhindern, wenn sich das Schließventilelement (40) in seiner offenen Stellung befindet, und um diesen Durchgang zu ermöglichen, wenn sich das Ventilelement (40) in seiner geschlossenen Stellung befindet;
- **dass** die Mittel zur Steuerung der Flussrate durch den Rückflusszweig (RR) umfassen: eine Vorregulierungskammer (58), welche auch als die Auffangkammer (38) fungiert, welche durch einen Anschluss (49), welcher an die Schließauflage (39) angrenzt, direkt mit dem Einlassanschluss (29) des Rückflusszweigs (RR) und mit dem entsprechenden Auslassanschluss (30) in Verbindung steht, wobei die Vorregulierungskammer (58) über eine entsprechende Öffnung (31), welche durch ein Verschlussstück (32) verschlossen ist, welches derart ausgestaltet ist, dass es nicht nur das Bedienelement (47), sondern auch eine Vorregulierungsringmutter (33) koaxial mit der Schließauflage (39) aufnimmt, mit der Außenseite in Verbindung steht; und Mittel (35, 36), um die Vorregulierungsringmutter (33) mehr oder weniger dicht bezüglich des Schließanschlusses (49) einzustellen, um die Flussrate der Flüssigkeit, welche durch den Rückflusszweig (RR) strömt, vorab zu regulieren.

2. Vierwegeventil (10) nach Anspruch 1, **dadurch gekennzeichnet, dass** die Umgehungskammer (19) darüber hinaus direkt mit dem Auslassanschluss (18) des Zuflusszweiges (RM) in Verbindung steht.

3. Vierwegeventil (10) nach Anspruch 1, **dadurch gekennzeichnet, dass** eine Kompensationskammer (53) an der Rückseite des Schließventilelements vorhanden ist, wobei diese Kammer (53) permanent mit dem Einlassanschluss (29) des Rückflusszweiges (RR) in Verbindung steht, um so die Kraft, welche das Bedienelement (47) auf das Schließventilelement (40) ausübt, gegen die entsprechende Feder (46) zu verringern, um es in seine offene Stellung zu bringen.

4. Vierwegeventil (10) nach Anspruch 1, **dadurch gekennzeichnet, dass** das Umgehungsventilelement (23) in einer Öffnung (22) vorhanden ist, welche in einem ersten Verschlussstück (21) vorhanden ist, welches derart ausgestaltet ist, dass die äußere Umgehungsöffnung (20) verschlossen ist, wobei die Öffnung (22) in dem ersten Verschlussstück (21) derart ausgestaltet ist, dass sie von außen ein zweites Verschlussstück (25) aufnimmt, um zu verhindern, dass das Umgehungsventilelement (23) gesehen wird.

5. Vierwegeventil (10) nach Anspruch 1, **dadurch gekennzeichnet, dass**, wenn ein Flüssigkeitsfilter in dem Zuflusszweig (RM) erforderlich ist, das Filter in der Umgehungskammer (19) angeordnet ist.

6. Vierwegeventil (10) nach Anspruch 5, **dadurch gekennzeichnet, dass** das Filter (26) mit einer zylindrischen Oberfläche ausgebildet ist und das Umgehungsventilelement (23) umgibt.

7. Vierwegeventil (10) nach Anspruch 1, **dadurch gekennzeichnet, dass** die Vorregierungsringmutter (23), das Schließventilelement (40) mit der entsprechenden Auflage (39) und das Umgehungsventilelement (23) mit dem entsprechenden Anschluss (27) koaxial sind, wobei die gemeinsame Achse (55) sowohl senkrecht zu der gemeinsamen Achse (56) des Einlassanschlusses (17) und des Auslassanschlusses (18) des Zuflusszweiges (RM) als auch senkrecht zu der gemeinsamen Achse (57) des Einlassanschlusses (29) und des Auslassanschlusses (30) des Rückflusszweiges (RR) ist.

8. Vierwegeventil (10) nach Anspruch 7, **dadurch gekennzeichnet, dass** das Schließventilelement (40) mittels einer Welle (48), welche koaxial zu der Vorregulierungsringmutter (33) angeordnet ist, durch das Bedienelement (47) zu öffnen ist.

## Revendications

1. Soupape à quatre voies (10) pour distribuer et contrôler un liquide dans un appareil d'un utilisateur duquel le liquide revient normalement à une température différente, la soupape (10) étant prévue avec un corps (12) ayant une face en amont (13), une face en aval (14) et une surface latérale (15, 16) qui assemble la face en amont (13) à la face en aval (14), le corps (12) comprenant une ramification de distribution (RM) pour le liquide provenant de la colonne de distribution de l'installation, et une ramification de retour (RR) pour transporter le liquide provenant de l'appareil de l'utilisateur jusqu'à la colonne de retour,
la ramification de distribution (RM) comprenant :
un orifice d'entrée (17) pour le liquide provenant de la colonne de distribution et prévu dans la face en amont (13) du corps (12), et un orifice de sortie (18) pour alimenter l'appareil de l'utilisateur prévu dans la face en aval (14) du corps (12) ;
une chambre de dérivation (19) ouverte vers l'extérieur via une ouverture (20) relative prévue dans la surface latérale (16) du corps (12), cette ouverture (20) permettant le logement d'un élément de soupape de dérivation (23) agencé pour coopérer avec un siège (24) relatif qui définit un orifice de dérivation pour raccorder la ramification de distribution (RM) à la ramification de retour (RR) ;
la ramification de retour (RR) comprenant :
un orifice d'entrée (29) pour le liquide provenant de l'appareil de l'utilisateur et prévu dans la face en aval (14) du corps (12), et un orifice de sortie (30) communiquant avec la colonne de retour prévue dans la face en amont (13) du corps (12) ;
une chambre d'interception (38), en communication avec l'orifice d'entrée (29) pour l'appareil de l'utilisateur, et un élément de soupape d'arrêt (40) maintenu en butée contre un siège (39) relatif par un ressort (46), l'élément de soupape d'arrêt (40) pouvant être actionné par un actionneur externe (47) pour l'amener dans sa position ouverte contre l'action dudit ressort (46) ;
des moyens (33, 35) pour réguler le débit du liquide dans la ramification de retour (RR) ;
**caractérisée en ce que** :
la chambre de dérivation (19) communique directement avec l'orifice d'entrée (17) de la ramification de distribution (RM) ;
l'élément de soupape de dérivation (23) est empêché de venir en butée contre le siège (24) relatif pour permettre à un débit minimum prédéterminé de liquide de passer par l'orifice de dérivation (27) ;
l'élément de soupape d'arrêt (40) présente également un élément de soupape supplémentaire (45) prévu pour coopérer avec l'orifice de dérivation (27) pour empêcher le passage du liquide à travers cet orifice (27) lorsque l'élément de soupape d'arrêt (40) est dans sa position ouverte et pour permettre ce passage lorsque ledit élément de soupape (40) est dans sa position fermée ;
lesdits moyens pour réguler le débit dans la ramification de retour (RR) comprennent : une chambre de pré-régulation (58) qui sert également de chambre d'interception (38), communiquant directement avec l'orifice d'entrée (29) de la ramification de retour (RR) et avec l'orifice de sortie (30) relatif par un orifice (49) délimité par le siège d'arrêt (39), la chambre de pré-régulation (58) communiquant avec l'extérieur via une ouverture (31) relative fermée par un bouchon (32) agencé pour recevoir non seulement ledit actionneur (47) mais également un écrou à oeil de pré-régulation (33) coaxial par rapport au siège d'arrêt (39) ; et des moyens (35, 36) pour positionner l'écrou à oeil de pré-régulation (33) plus ou moins près de l'orifice d'arrêt (49) afin de pré-réguler le débit de liquide passant par la ramification de retour (RR).

2. Soupape à quatre voies (10) selon la revendication 1, dans laquelle la chambre de dérivation (19) communique également directement avec l'orifice de sortie (18) de la ramification de distribution (RM).

3. Soupape à quatre voies selon la revendication 1, dans laquelle une chambre de compensation (53) est prévue à l'arrière de l'élément de soupape d'arrêt, cette chambre (53) étant en communication permanente avec l'orifice d'entrée (29) de la ramification de retour (RR), afin de réduire la force que l'actionneur (47) doit exercer sur l'élément de soupape d'arrêt (40), contre ledit ressort (46) relatif, pour l'amener dans sa position ouverte.

4. Soupape à quatre voies (10) selon la revendication 1, dans laquelle l'élément de soupape de dérivation (23) est logé dans une ouverture (22) prévue dans un premier bouchon (21) agencé pour fermer l'ouverture de dérivation externe (20), l'ouverture (22) dans le premier bouchon (21) étant agencée pour recevoir extérieurement un second bouchon (25) afin d'empêcher l'élément de soupape de dérivation (23) d'être vu.

5. Soupape à quatre voies (10) selon la revendication 1, dans laquelle, si un filtre de liquide est nécessaire dans la ramification de distribution (RM), le filtre est positionné dans la chambre de dérivation (19).

6. Soupape à quatre voies (10) selon la revendication 5, dans laquelle le filtre (26) est formé avec une surface cylindrique et entoure l'élément de soupape de dérivation (23).

7. Soupape à quatre voies (10) selon la revendication 1, dans laquelle l'écrou à oeil de pré-régulation (33), l'élément de soupape d'arrêt (40) avec le siège (39) relatif et l'élément de soupape de dérivation (23) avec l'orifice (27) relatif sont coaxiaux, l'axe commun (55) étant perpendiculaire à la fois à l'axe commun (56) de l'orifice d'entrée (17) et de l'orifice de sortie (18) de la ramification de distribution (RM), et à l'axe commun (57) de l'orifice d'entrée (29) et de l'orifice de sortie (30) de la ramification de retour (RR).

8. Soupape à quatre voies (10) selon la revendication 7, dans laquelle l'élément de soupape d'arrêt (40) est réalisé pour être ouvert par l'actionneur (47) au moyen d'une tige (48) disposée de manière coaxiale par rapport à l'écrou à oeil de pré-régulation (33).
